# EUROPEAN PATENT SPECIFICATION

(11) **EP 2 440 647 B1**
(45) Date of publication and mention of the grant of the patent: **12.10.2022**
(21) Application number: 10722642.5
(22) Date of filing: 04.06.2010
(51) Int. Cl.: A01N 25/28, C11D 17/00, A01N 25/26, C11D 3/386, C11D 3/38

(54) **MICROCAPSULES CONTAINING MICROORGANISMS**
MIKROORGANISMEN ENTHALTENDE MIKROKAPSELN
MICROCAPSULES CONTENANT DES MICROORGANISMES

(30) Priority: 09.06.2009 GB 0909909
(43) Date of publication of application: 18.04.2012
(60) Divisional application: 21206899.3
(73) Proprietor: Devan Chemicals NV, 9600 Ronse-Renaix (BE)
(72) Inventor: VANDENDAELE, Patrice, B-9600 Ronse (BE); TEMMERMAN, Robin, B- 9160 Lokeren (BE)
(74) Representative: Marks & Clerk LLP
(86) International application number: PCT/EP2010/003377
(87) International publication number: WO 2010/142401

(56) References cited:
- WO-A1-01/06054
- US-A1- 2004 022 990
- US-A1- 2008 107 699

## Description

### Introduction

The invention relates to microcapsules containing microorganisms, such as probiotic or beneficial bacteria, and their use for deposition onto surfaces, such as hard surfaces, fabrics or textiles, to provide extended release of the microorganisms whereby a beneficial microflora may be established and maintained, discouraging colonisation of the surfaces by pathogenic or other harmful microorganisms. In particular, the invention is of use for providing a reservoir of releasable microorganisms on fabrics or textiles.

### Background

A broad range of pathogenic (= disease causing) bacteria pose numerous health problems to humans and animals. Some examples are *Clostridium difficile, E. coli, Enterococcus, Legionella, Listeria, Salmonella, Staphylococcus aureus* (MRSA) and *Streptococcus.* In addition to the dangers to individuals caused by these organisms, they are also responsible for large economic losses and costs. Using antibiotics and disinfectants, these problems were relatively easily controlled during the past decades. However, rising resistance to antibiotics and disinfectants by harmful organisms is now a problem.

Deposition of organic matter such as food spillage or vomit, faeces or urine from babies, pets and the like can result not only in soiling of the textiles such as furnishings, carpets and mattresses, but may result in lingering odour and may, in some circumstances, require the replacement of the soiled item or associated textile.

Deposition of such materials may support bacterial growth, especially in the case of faeces which already contains bacteria. This may lead to risk of disease in persons exposed to the deposits. Fungal growth, such as mould, mildew and the like may also arise. Furnishing textiles are known to contain a number of naturally occurring bacteria and other organisms. Some of these organisms may themselves give rise to odours arising from their digestion of organic matter deposits.

The use of anti-microbial chemical agents, whilst reducing the organism count associated with furnishing textiles, may give rise to concerns that some organisms may develop resistance to the chemical agents, leading to problems in the longer term.

An alternative to the use of chemical antibiotics and disinfectants has been established, using so called "friendly", or non-harmful, non-pathogenic bacteria (referred to hereinafter as beneficial bacteria). When a surface is cleaned, rather than leaving it sterile through use of strong chemical agents, beneficial bacteria are deposited onto the surface from a cleaning solution. They will consume remaining food sources, leaving neither nourishment nor space for potential pathogenic colonisers.

Because the beneficial bacteria remain active for several hours or days, the cleaning procedure only needs to be repeated after several days. Given a regular frequency of application, most pathogenic bacteria will be replaced by beneficial bacteria, giving a stable and healthy microflora on surfaces. Details of the use of beneficial bacteria for cleaning purposes may be found in US patent publication 2008107699. It is known to directly encapsulate lyophilised microorganisms such as probiotic bacteria with coatings in order to increase their viability following storage in tablets and powders for consumption. US2004/022990 describes compositions and methods for providing extended release of fragrances and other agents.

In addition to hard surfaces, such techniques may also be used on soft surfaces such as fabrics, carpets or textiles. Here it is desirable to prevent malodour and generation of allergens. For clothing, this is achieved through regular washing, but some fabrics, such as furnishing fabrics and mattress ticking (the fabric covering mattresses) are not generally subject to washing and so are prone to colonisation by harmful microorganisms.

Although treatment by deposition of beneficial microorganisms onto surfaces is effective in preventing colonisation by harmful microorganisms in the short term, regular maintenance of the beneficial microflora is desirable, for instance by topping up the numbers of beneficial microorganisms at regular intervals.

It is desirable to reduce the need for frequent re-treatment of surfaces to give reintroduction of beneficial microorganisms, so reducing the cost and effort associated with the use of beneficial microorganisms. It is also desirable for the everyday use of a surface, hard or soft, to lead to maintenance of the beneficial microflora for longer periods than at present.

### Summary of the Invention

One object of the invention, amongst others, is to provide compositions and methods that may be used to establish and maintain beneficial microflora on surfaces as the surfaces are used. Another object of the invention is to provide a means for depositing beneficial microorganisms onto surfaces, particularly fabrics and textiles, such that the feel or texture of the surface is not substantially altered.

A first aspect of the invention provides a composition for delivery of a microorganism onto a textile selected from the group consisting of carpets, furnishings and a mattress surface, the composition comprising friable microcapsules having a diameter from 1 to 300 µm dispersed within a treatment solution, the microcapsules adapted for delivery of a liquid onto said textile by rupture under the action of direct external pressure and/or shear forces during conventional use of said textile, the microcapsules comprising a polymer shell having an outer face and an inner face, the inner face encapsulating the liquid, the proportion by weight of shell with respect to the liquid core being from 1:500 to 1:5000 wherein the liquid contains the microorganism in a vegetative state and the polymer shell is a polymeric material impervious to the materials in the liquid core and materials which may come into contact with the outer face of the shell.

A second aspect of the invention provides a method for treatment of a textile selected from the group consisting of carpets, furnishings and a mattress surface comprising:
a) providing a composition according to the first aspect of the invention,
b) applying the composition to the textile whereby the microcapsules are deposited onto the textile to provide a treated textile.

A third aspect of the invention provides a method of maintaining beneficial microorganism colony on a textile selected from the group consisting of carpets, furnishings and a mattress surface, the method comprising;
depositing friable microcapsules, holding liquid comprising the microorganism, onto the textile by application of a composition according to the first aspect of the invention, and subsequent evaporation of the treatment solution to provide a treated textile, and
releasing the microorganism onto the treated fabric during use of the treated textile by rupture of the friable microcapsules caused under the action of direct external pressure and/or shear forces during conventional use of the treated textile.

A fourth aspect of the invention provides the use of a composition, according to the first aspect of the invention, to provide a beneficial microflora on a textile selected from the group consisting of carpets, furnishings and a mattress surface by rupture of friable microcapsules deposited onto the textile to release microorganism onto the textile under the action of direct external pressure and/or shear forces during conventional use of the textile.

The present invention is defined by the appended claims 1 to 15.

### Detailed Description of the invention

The microcapsule is for delivery of a liquid onto a surface by rupture, and so is suitably of a friable nature, i.e. arranged for rupture during use, subsequent to its application onto a surface. This may be arranged by choice of the strength of material making up the shell of the microcapsule and its wall thickness. The microcapsule has a shell having an outer face and an inner face, the inner face forming an enclosure for encapsulating the liquid. The liquid contains a microorganism: the microorganism will be in a vegetative state.

The microcapsules useful in the present invention comprise a liquid core containing the beneficial microorganism,in a vegetative state, and a polymeric shell completely surrounding the liquid core. By encapsulating the microorganism in liquid in a shell, the microorganism is protected throughout the process of application of the microcapsule to a surface. Typically the shell is of a water-insoluble material. The microorganism, when in a vegetative state, is able to withstand heat and lack of water, oxygen and the like whilst in the microcapsule. When the microcapsule is ruptured, the microorganism is brought back into a reproductive state by contact with oxygen and moisture.

The microcapsule polymer shell is a polymeric material impervious to the materials in the liquid core and materials which may come in contact with the outer surface of the shell. The microcapsule shell wall can be composed of a wide variety of polymeric materials including gelatine, polyurethane, polyolefin, polyamide, polyester, polysaccharide, silicone resins, chitosan and epoxy resins. Many of these types of polymeric microcapsule shell materials are further described and exemplified U.S. Pat. No. 3,870,542.

Highly preferred materials for the microcapsule shell wall are aminoplast polymers comprising the reactive products of, for instance, urea or melamine and aldehyde, e.g. formaldehyde. Such materials are those which are capable of acid condition polymerization from a water-soluble prepolymer or precondensate state. Polymers formed from such precondensate materials under acid conditions are water-insoluble and can provide the requisite capsule friability characteristics to allow subsequent rupture of the capsule.

Microcapsules having the liquid cores and polymer shell walls as described above can be prepared by any conventional process which produces capsules of the requisite size, friability and water-insolubility. Generally, such methods as coacervation and interfacial polymerization can be employed in known manner to produce microcapsules of the desired characteristics. Such methods are described in US Patent 3,870,542, US Patent 3,415,758 and US Patent 3,041,288.

Microcapsules made from aminoplast polymer shell materials can be made by an interfacial polymerization process as detailed in US Patent 3,516,941. An aqueous solution of a precondensate (methylol urea) is formed containing from about 3% to 30% by weight of the precondensate. Water-insoluble liquid core material, such as a hydrophobic oil, is dispersed throughout this solution in the form of microscopically-sized discrete droplets. While maintaining solution temperature between 20 and 90°C., acid is then added to catalyze polymerization of the dissolved precondensate. If the solution is rapidly agitated during this polymerization step, shells of water-insoluble aminoplast polymer form around and encapsulate the dispersed droplets of liquid core material. Capsules suitable for use in the present invention may be produced by a similar method, with the beneficial bacteria dispersed through the hydrophobic liquid core material prior to polymerization. Preferably, the polymer of the shell is a melamine formaldehyde resin or includes a layer of this polymer.

The microcapsules vary in size, and have diameters from 1 to 300 µm, preferably from 2 to 100 µm more preferably from 2 to 50 µm. The proportion by weight of shell with respect to the liquid core will be from 1:500 to 1:5,000. If the proportion is lower than 1:10,000 the resultant shell may be too thin. If the proportion is higher than 1:100, the resultant wall may be too strong to rupture easily. The exact details will depend upon the shell used.

The microcapsules of the present invention must be friable in nature. Friability refers to the propensity of the microcapsules to rupture or break open when subjected to direct external pressures or shear forces. For purposes of the present invention, the microcapsules utilized are "friable" if, while attached to surfaces, they may be ruptured in order to release the liquid core. For instance, if the surface is a textile or fabric, or the surface of a textile fibre or yarn, the microcapsules should rupture as a result of shear forces caused by normal handling or use.

Preferably, the outer face of the shell of the microcapsule comprises reactive functional groups whereby the outer face is chemically bondable to said surface. This enables the microcapsules to bond or to be bonded to suitable surfaces without the need for a separate adhesive composition being applied to the surface. Such adhesive compositions may alter the feel or texture of a surface. Preferably, the reactive functional group comprises a reactive moiety adapted to provide covalent bonding to said surface.

Examples of suitable reactive functional groups include groups such as acid anhydride groups, amino groups, N-substituted amino groups and their salts, epoxy groups (such as cyclohexyl epoxy groups), glycidyl groups, hydroxyl groups, isocyanate groups, urea groups, aldehyde groups, ester groups, ether groups, alkenyl groups, alkynyl groups, thiol groups, disulphide groups, silyl or silane groups, glyoxal-based groups, aziridine-based groups, groups based on active methylene compounds or other b-dicarbonyl compounds (such as 2,4-pentadione, malonic acid, acetylacetone, ethylacetone acetate, malonamide, acetoacetamide and its methyl analogues, ethyl acetoacetate and isopropyl acetoacetate), halo groups and hydrides. Polar groups (i.e. positively or negatively charged, zwitterionic or amphoteric groups) or hydrogen bonding groups may also be considered as reactive functional groups, but groups having reactive moieties providing covalent bonding are preferred.

The chemical bonds may be obtained through the introduction of functional groups in the microcapsules that bind chemically to functional groups of a surface. For instance if the surface is a fabric or a textile, the functional groups may be selected or adapted to form a chemical bond, with the fibres making up the textile or fabric, for instance with groups on the fibres such as hydroxyl groups or the like. The chemical bonds can be ionic, hydrogen bonding or, better still, covalent, where a simple chemical reaction takes place by addition or substitution. Reaction may be promoted solely by the pH of the solution in which the microcapsules are applied to the surface, normally an alkaline solution, or initiators may be included in case of an addition radical reaction. Covalent bonds are more resistant and ensure the permanence of bonding of the microcapsules to the fibres.

For surfaces with cationic charges, for example polyamide fibres when in acid conditions, negative charges may be introduced onto the outer face of the microcapsules, for instance by means of functional groups with negative charges, which will impart affinity between microcapsules and surface and provide a strong bond between the microcapsules and the fibres. Other groups, such as epoxy groups, may be incorporated into the outer face by suitable copolymerization, for instance during formation of the microcapsules.

In the case of cellulosic fibres, the process is similar to the dyeing process with reactive dyes. Just as with dyes, microcapsules should have groups, such as functional groups provided on the outer face of the shell of the microcapsules that convey affinity towards the fibres and can react with the hydroxyl groups of the cellulose.

For instance, the shell may be a melamine formaldehyde resin but with the polymerization process controlled in terms of temperature, catalyst and pH such that not all amino groups of the melamine are reacted, leaving free primary and secondary groups on the outer face of the microcapsules. This may be verified by acid-base titration.

The reactive functional groups may be introduced into the outer face of urea-formaldehyde, melamine-formaldehyde, polyamide or chitosan shells by reaction with the amino or hydroxyl groups present on the outer faces of such microcapsules.

As an alternative, microcapsules with an outer layer coating an inner polymer shell may be employed, the outer layer having suitable reactive functional groups on its outer face.

For aminoplast resins such as urea- or melamine- formaldehyde, co-monomers containing functional groups may be introduced. For instance, glycidyl methacrylate or any other suitable monomer that may contain epoxy (glycidyl) groups, or acrylic acid containing carboxylic groups may be used. Other suitable reactive functional groups are listed hereinbefore.

For microcapsules with an outer polymer layer separate from an inner structural layer, it is, for example, possible to use a shell of melamine-formaldehyde coated with a vinyl polymer, where the monomer used for forming the vinyl polymer contains a functional group that will form ionic bonds with the fibres, or groups that may react with the fibres to form covalent bonds, such as an epoxy group, alkyl with a halogen substitution, such as ethyl chlorine, vinyl groups or heterocyclic groups. Other suitable reactive functional groups are listed hereinbefore.

Where the outer face is of an aminoplast resin such as urea- formaldehyde or melamine-formaldehyde, or is a polyamide or chitosan, the introduction of functional groups, such as epoxy groups or ethyl chlorine, for example, may be achieved through a reaction between unreacted free amine groups and a bifunctional bridging agent (i.e. bonding agent) that contains epoxy groups, alkyl groups substituted with a halogens vinyl groups or heterocyclic, leaving the other group of the bifunctional agent free for reacting with the surface.

Further details of microcapsules with functional reactive groups for binding to surfaces, specifically to fibres, may be found in the publication WO 2006/117702. Hence, the functional reactive groups of the outer face of the shell of the microcapsules are preferably groups adapted to react with a second functional group of a surface, such as a fibre surface, whereby a covalent bond is formed between the functional reactive group of the microcapsule and the second functional group of the surface. The reactive moiety may be adapted to provide covalent bonding to the surface.

Preferably, the beneficial microorganism is selected from the group consisting of sporous bacteria, fungi, and yeasts, non-sporous bacteria, fungi and yeasts and mixtures thereof.

Preferably it is a sporous bacterium. The preferred beneficial microorganisms are bacteria of the genus Lactobacillus. Lactobacillus bacteria are known and readily available to the public from various commercial suppliers. Danisco USA Inc., 3329 Agriculture Drive, Madison, Wis. 53716 is a commercial supplier of probiotic bacteria suitable for the invention. Other commercially-available strains are well-known and readily available. Bacteria may be of any suitable type, including but not limited to *Lactobacillus acidophilus, Lactobacillus plantarum, Lactobacillus salivarius, Lactobacillus delbrueckiil, Lactobacillus rhamnosus, Lactobacillus bulgaricus, Lactobacillus crispatus, Lactobacillus gasseri, Lactobacillus jensenii;* the *Lactococcus* genus including *Lactococcus lactis* (subsp. *Lactis); Streptococcus thermophilus; Propionibacterium freudenreichii* subsp. *Shermanii; Enterococccus* genus, including *Enterococcus faecium* and *Enterococcus thermophilus;* the *Bifidobacterium* genus, including *Bifidobacterium longum, Bifidobacterium infantis,* and *Bifidobacterium bifidum; Bacillus* genus, including *Bacillus coagulans, Bacillus thermophilus, Bacillus laterosporus, Bacillus subtilis, Bacillus megaterium, Bacillus licheniformis, Bacillus Pasteurii, Bacillus laevolacticus, Bacillus amyloliquifaciens, Bacillus mycoides, Bacillus pumilus, Bacillus lentus, Bacillus cereus* and *Bacillus circulans; Sporolactobacillus* genus; *Micromonospora* genus; *Micrococcus* genus; *Rhodococcus* genus; *Escherichia coli.;* and *Pseudomonas genus,* including *Pseudomonas fluorescens* and *Pseudomonas aeruginosa.* Microorganisms broadly include bacteria, yeast or fungi. Probiotic yeast may be of any suitable type, including but not limited to the genus *Saccharomyces,* such as described in US Patent 6,524,575. Probiotic fungus may be of any suitable type, including but not limited to the genus *Aspergillus,* such as described in U.S. Pat. No. 6,368,591. Suitable beneficial microorganisms may be selected according to one or more particular properties. A preferred property is that the microorganisms display competitive exclusion of pathogenic organisms from the surface to which they are applied.

Some organic matter likely to be deposited on furnishing textiles and mattresses is high in fat. The beneficial organism may be selected to have high activity against fatty materials. An example of such a bacterium is *Bacillus pasteurii* which generates lipase.

The liquid used in the core of the microcapsule and in which the microorganism is contained is suitably a non-aqueous liquid, in other words containing less than 0.1% by weight of water.

Preferably, the non-aqueous liquid is a water-immiscible liquid (i.e. less than 1% solubility in water and vice versa). This assists in the formation of the microcapsules by an emulsion polymerization route. A suitable water-immiscible liquid is selected from the group consisting of organic oils, silicone oils, fluorocarbons and mixtures thereof. Silicone oils are preferred, suitably with a viscosity of 100 centistokes (mm²/sec) or less, preferably 100 centistokes (mm²/sec) or less at 25°C. Typically, the liquid will contain the microorganism dispersed within it. The weight percent of microorganism, expressed as a percentage of the total weight of microorganism and liquid together, will typically be from 1 to 70%, suitably from 5 to 50%.

The first aspect of the invention provides a composition for delivery of a microorganism onto a textile selected from the group consisting of carpets, furnishings and a mattress surface , the composition comprising friable microcapsules as defined in the first aspect of the invention, dispersed within a treatment solution. Preferably the treatment solution is an aqueous solution, i.e. containing at least 80%, preferably 90% or more by weight of water. This allows the surface of the textile to be dried evaporatively after treatment in order to remove the treatment solution.

Typically, the composition of the invention will comprise from 0.1% to 50% by weight of the microcapsules, preferably 0.2 to 30%, more preferably 0.3 to 20% depending upon how the composition is to be used. Preferably the microcapsules are stably dispersed within the treatment solution.

The composition may also comprise wetting agents such as surfactants in order to aid with the spreading of the microcapsules onto a surface to be treated. The composition may also comprise a binder (i.e. an adhesive) to assist in adhering the microcapsules to a surface. By binder is meant a compound which remains along with the microcapsules on a surface after evaporation of the rest of treatment solution has evaporated, acting as a binder layer adhering microcapsules to the surface. This binder is not the same as the bonding agent detailed hereinafter, in that it does not lead to chemical bonding of the outer face of the microcapsules to the surface, but merely adheres the microcapsules by entrapment or adhesive forces. A typical suitable binder would be, for instance, an acrylic polymer or a polyurethane resin. A suitable binder level is 0.1 to 3% by weight of the composition.

The composition of the invention may comprise a bonding agent. The bonding agent is an agent for chemically bonding the microcapsules to a surface. By a bonding agent is meant an agent that reacts to form a chemical bridge between a reactive functional group on the outer face of the microcapsules and the surface. A useful bonding agent will have two separate reactive groups as part of the molecule, one for bonding to a functional reactive group of the outer face of the shell of the microcapsule, and the other adapted to bond to groups on the surface. A preferred bonding agent is a functional trialkylsiloxane, such as 3-glicidoxypropyltrimethoxysiloxane. Such functional trialkoxysiloxanes are widely used in coupling applications in order to provide chemical bonding between polymeric matrices and textile fibres. The bridging mechanism is related to the presence of two types of reactive moieties in their structure. The bonding agent may be part of the composition of the invention, such that initial reaction with the outer face of the microcapsules takes place before the composition is applied to a surface, or the bonding agent may be applied contemporaneously with the treatment solution. When present in the composition, the bonding agent will typically be present at a level from 0.01 to 5% by weight of the composition.

The composition may be provided as a kit of parts comprising separate solutions, such as a first solution comprising the microcapsules and a second solution comprising a bonding agent, whereby the first and second solutions are combined when treating a surface.

The second aspect of the invention provides a method for treatment of a textile selected from the group consisting of carpets, furnishings and a mattress surface comprising:
a) providing a composition according to the first aspect of the invention,
b) applying the composition to the textile whereby the microcapsules are deposited onto the textile to provide a treated textile.

Preferably, the microcapsules are chemically bonded to the surface by means of reactive functional groups on the outer face of the shell of the microcapsule, the reactive functional groups selected or adapted to form a chemical bond with the surface, preferably a covalent bond, for instance with a second functional group of the surface.

The method of treatment may be a method for controlling odour associated with deposits of organic matter on a surface.

The microcapsules can be applied by any suitable process such as padding, spraying or wiping, with the microcapsules dispersed in a liquid as set out herein. The method may be used as an industrial method, for instance to treat surfaces such as fabrics or textiles before they are incorporated into products such as furniture, mattresses, carpets and the like. In this way, the microcapsules are already present when the product is used and will help to maintain a beneficial microflora as the microcapsules rupture during normal use of the product. Alternatively, the treatment may be used as a domestic treatment by an end user of a product.

In addition to preventing or hindering colonisation by pathogenic microorganisms, the invention is also useful for preventing non-pathogenic nuisance microorganisms, such as microorganisms which may lead to discolouration or malodours on surfaces, e.g. arising from mould growth.

Where the surface is a fabric or textile, in addition to these application methods, an exhaustion method may be employed, where the fabric or textile is contacted with the treatment solution in a bath and subsequently removed with the microcapsules deposited, preferably bonded, more preferably covalently bonded, onto it. This method is particularly effective when the microcapsules are arranged to chemically bond to the surface as detailed herein.

The method may comprise applying a bonding agent to the surface whereby the microcapsules are chemically bonded to the surface. By a bonding agent is meant an agent that reacts to form a chemical bridge between a reactive functional group on the outer face of the microcapsules and the surface (or second functional groups of the surface). A useful bonding agent will have two separate reactive groups as part of the molecule, one for bonding to a functional reactive group of the outer face of the shell of the microcapsule, and the other adapted to bond to groups on the surface. A preferred bonding agent is a functional trialkylsiloxane, such as 3-glycidoxypropyltrimethoxysiloxane. Such functional trialkoxysiloxanes are widely used in coupling applications in order to provide chemical bonding between polymeric matrices and textile fibres. The bridging mechanism is related to the presence of two types of reactive moieties in their structure. The bonding agent is preferably applied contemporaneously with the treatment solution (i.e. the treatment solution and the binding agent are contacted with the surface within say five minutes of each other and before separation of treatment solution and surface). This enables the microcapsules to become chemically bonded to the surface to be treated without the need for a binder in the treatment composition.

After contacting the surface with the treatment solution to deposit the microparticles, the surface is preferably dried whereby treatment solution is removed and unruptured microcapsules remain chemically bonded to the surface. Where the treatment solution is aqueous, natural or forced evaporative drying may be useful. Typically, the microcapsules are applied to a surface at a level of 0.1 to 20 gram/m² of surface, preferably from 0.2 to 10, more preferably from 0.3 to 5 and even more preferably from 0.5 to 3. At these levels, there are sufficient microcapsules to give establishment and maintenance of microflora without the presence of the microcapsules leading to a major change in the appearance or texture of the surface.

After drying the surface, microcapsules are later mechanically ruptured in order to release the microorganism onto the surface. Preferably, this mechanical rupturing of the microcapsules takes place as a result of forces to which the microcapsules are subjected during the normal use of the surface. For instance, if the surface is a hard surface such as a floor, rupture may take place when people walk on the surface, so that microorganisms deposited from shoe bottoms may be countered by beneficial microorganisms released from microcapsules.

The invention is particularly of use when the surface is a textile or fabric, such as a knitted or woven fabric or a non-woven. After drying the textile or fabric, microcapsules are mechanically ruptured to release the microorganism onto the surface by shear forces generated during conventional use of the textile or fabric. Typically, larger microcapsules are more easily ruptured whereas smaller microcapsules may need greater forces to lead to rupture. It is desirable to provide polydisperse microcapsules (i.e. of various sizes).

For non-woven fabrics, it may be beneficial to incorporate the microcapsules of the invention into the liquid used for formation of the non-woven fabric such that the microcapsules are entrapped within the body of the non-woven fabric. For instance a household wiping cloth made of a non woven fabric with microcapsules of the invention entrapped therein would be useful as a cloth for wiping and cleaning hard surfaces in a kitchen or bathroom, with the microcapsules rupturing to release the microorganisms as a result of pressures and stresses as the cloth is used for wiping.

Once microcapsules containing the beneficial microorganism have been attached to fabrics being treated, it is necessary to manipulate the treated fabrics in a manner sufficient to rupture the microcapsules and thereby to release the beneficial microorganism.

Microcapsules of the type utilized in the invention have friability characteristics such that the ordinary fabric manipulation which occurs when the treated fabrics are used is sufficient for some of the attached microcapsules to rupture and so release the microorganism onto the fabric. A significant number of attached microcapsules can be broken by the normal forces encountered. For fabric articles which are not worn, the normal household handling operations such as folding, crumpling etc. can serve as fabric manipulation sufficient to rupture the attached microcapsules.

Where the microcapsules are chemically bonded to the fabric or textile, it may be possible to wash the fabric or textile using conventional detergents and a gentle washing protocol without rupturing or detaching some of the microcapsules. Thus the microcapsules may still be present after washing in order to provide a desired microflora on rupture.

For instance, the invention may be used to provide a mattress ticking upon which are deposited the microcapsules of the invention. The microcapsules may be applied by an industrial process to the ticking prior to making it up into a mattress cover, or after the mattress has been formed, or may be applied to the mattress ticking in a domestic situation, for instance by an end user or a treatment provider. In use, when the mattress is slept on, the movement of a body may rupture microcapsules deposited on or in the ticking leading to release of the liquid from the microcapsules and release of the beneficial microorganism from its vegetative state. This allows the microflora of the mattress ticking to be maintained in a beneficial state, with topping up of the beneficial microflora taking place when the mattress is used.

Once released and activated (for instance by contact with moisture), the beneficial organisms may grow and replicate, consuming organic matter in ant deposit on a surface until the matter is consumed. After the matter has been consumed, the organisms may again become dormant, for instance by spore formation.

It should be understood that while the use of words such as "preferable", "preferably", "preferred" or "more preferred" in the description suggest that a feature so described may be desirable, it may nevertheless not be necessary and embodiments lacking such a feature may be contemplated as within the scope of the invention as defined in the appended claims. In relation to the claims, it is intended that when words such as "a," "an," "at least one," or "at least one portion" are used to preface a feature there is no intention to limit the claim to only one such feature unless specifically stated to the contrary in the claim. When the language "at least a portion" and/or "a portion" is used the item can include a portion and/or the entire item unless specifically stated to the contrary.

## Claims

1. A composition for delivery of a microorganism onto a textile selected from the group consisting of carpets, furnishings and a mattress surface, the composition comprising friable microcapsules having a diameter from 1 to 300 µm dispersed within a treatment solution, the microcapsules adapted for delivery of a liquid onto said textile by rupture under the action of direct external pressure and/or shear forces during conventional use of said textile, the microcapsules comprising a polymer shell having an outer face and an inner face, the inner face encapsulating the liquid, the proportion by weight of shell with respect to the liquid core being from 1:500 to 1:5000 wherein the liquid contains the microorganism in a vegetative state and the polymer shell is a polymeric material impervious to the materials in the liquid core and materials which may come into contact with the outer face of the shell.

2. A composition according to claim 1 wherein the outer face comprises reactive functional groups whereby the outer face is chemically bondable to said textile,

3. A composition according to claim 2 wherein the reactive functional group comprises a reactive moiety adapted to provide covalent bonding to said textile.

4. A composition according to any preceding claim wherein the microorganism is selected from the group consisting of sporous bacteria, sporous fungi, non-sporous bacteria, non-sporous fungi, and mixtures thereof.

5. A composition according to any preceding claim wherein the liquid is a non-aqueous liquid.

6. A composition according to claim 5 wherein the non-aqueous liquid is a water-immiscible liquid selected from the group consisting of organic oils, silicone oils, fluorocarbons and mixtures thereof.

7. A composition according to any preceding claim wherein the shell comprises a polymer layer, wherein the polymer is a melamine formaldehyde resin.

8. A composition according to any preceding claim wherein the treatment solution is an aqueous solution.

9. A method for treatment of a textile selected from the group consisting of carpets, furnishings and a mattress surface comprising:
a) providing a composition according to any one of claims 1 to 8,
b) applying the composition to the textile whereby the microcapsules are deposited onto the textile to provide a treated textile.

10. A method according to claim 9 wherein the microcapsules are chemically bonded, preferably covalently bonded, to the textile.

11. A method according to claim 9 or claim 10 further comprising applying a bonding agent to the surface whereby the microcapsules are chemically bonded to the textile.

12. A method according to any one of claims 9 to 11 wherein the textile is a mattress surface or a carpet.

13. A method, according to any one of claims 9 to 12, wherein the treatment solution is removed by evaporation, and after said removal, microcapsules are mechanically ruptured to release the microorganism onto the treated textile by direct external pressure and/or shear forces generated during conventional use of the treated textile.

14. A method of maintaining beneficial microorganism colony on a textile selected from the group consisting of carpets, furnishings and a mattress surface, the method comprising;
depositing friable microcapsules, holding liquid comprising the microorganism, onto the textile by application of a composition according to any one of claims 1 to 8, and subsequent evaporation of the treatment solution to provide a treated textile, and
releasing the microorganism onto the treated fabric during use of the treated textile by rupture of the friable microcapsules caused under the action of direct external pressure and/or shear forces during conventional use of the treated textile.

15. The use of a composition, according to any one of claims 1 to 8, to provide a beneficial microflora on a textile selected from the group consisting of carpets, furnishings and a mattress surface by rupture of friable microcapsules deposited onto the textile to release microorganism onto the textile under the action of direct external pressure and/or shear forces during conventional use of the textile.

## Patentansprüche

1. Zusammensetzung zur Abgabe eines Mikroorganismus auf ein Textil ausgewählt aus der Gruppe bestehend aus Teppichen, Einrichtungsgegenständen und einer Matratzenoberfläche, wobei die Zusammensetzung brüchige Mikrokapseln mit einem Durchmesser von 1 bis 300 µm, die in einer Behandlungslösung dispergiert sind, umfasst, wobei die Mikrokapseln zur Abgabe einer Flüssigkeit auf das Textil durch Aufbrechen unter Einwirkung von direktem äußerem Druck und/oder Scherkräften während einer herkömmlichen Verwendung des Textils geeignet sind, wobei die Mikrokapseln eine Polymerhülle mit einer Außenfläche und einer Innenfläche umfassen, wobei die Innenfläche die Flüssigkeit einkapselt, wobei das Gewichtsverhältnis der Hülle in Bezug auf den flüssigen Kern von 1:500 bis 1:5000 beträgt, wobei die Flüssigkeit den Mikroorganismus in einem vegetativen Zustand enthält und die Polymerhülle ein Polymermaterial ist, das für die Materialien im flüssigen Kern und für Materialien, die mit der Außenfläche der Hülle in Kontakt kommen können, undurchlässig ist.

2. Zusammensetzung nach Anspruch 1, wobei die Außenseite reaktive funktionelle Gruppen umfasst, wodurch die Außenseite chemisch an das Textil gebunden werden kann.

3. Zusammensetzung nach Anspruch 2, wobei die reaktive funktionelle Gruppe eine reaktive Einheit umfasst, die geeignet ist, eine kovalente Bindung an das Textil bereitzustellen.

4. Zusammensetzung nach einem der vorhergehenden Ansprüche, wobei der Mikroorganismus ausgewählt ist aus der Gruppe bestehend aus sporenbildenden Bakterien, sporenbildenden Pilzen, nicht sporenbildenden Bakterien, nicht sporenbildenden Pilzen und Mischungen davon.

5. Zusammensetzung nach einem der vorhergehenden Ansprüche, wobei die Flüssigkeit eine nichtwässrige Flüssigkeit ist.

6. Zusammensetzung nach Anspruch 5, wobei die nichtwässrige Flüssigkeit eine mit Wasser nicht mischbare Flüssigkeit ist, ausgewählt aus der Gruppe bestehend aus organischen Ölen, Silikonölen, Fluorkohlenwasserstoffen und Mischungen davon.

7. Zusammensetzung nach einem der vorhergehenden Ansprüche, wobei die Hülle eine Polymerschicht umfasst, wobei das Polymer ein Melamin-Formaldehyd-Harz ist.

8. Zusammensetzung nach einem der vorhergehenden Ansprüche, wobei die Behandlungslösung eine wässrige Lösung ist.

9. Verfahren zur Behandlung eines Textils ausgewählt aus der Gruppe bestehend aus Teppichen, Einrichtungsgegenständen und einer Matratzenoberfläche, Folgendes umfassend:
a) Bereitstellen einer Zusammensetzung nach einem der Ansprüche 1 bis 8,
b) Aufbringen der Zusammensetzung auf das Textil, wodurch die Mikrokapseln auf dem Textil abgeschieden werden, um ein behandeltes Textil bereitzustellen.

10. Verfahren nach Anspruch 9, wobei die Mikrokapseln chemisch, vorzugsweise kovalent, an das Textil gebunden sind.

11. Verfahren nach Anspruch 9 oder Anspruch 10, ferner umfassend das Aufbringen eines Bindemittels auf die Oberfläche, wodurch die Mikrokapseln chemisch an das Textil gebunden werden.

12. Verfahren nach einem der Ansprüche 9 bis 11, wobei das Textil eine Matratzenoberfläche oder ein Teppich ist.

13. Verfahren nach einem der Ansprüche 9 bis 12, wobei die Behandlungslösung durch Verdampfen entfernt wird, und nach der Entfernung die Mikrokapseln mechanisch durch direkten äußeren Druck und/oder Scherkräfte, die während einer herkömmlichen Verwendung des behandelten Textils erzeugt werden, aufgebrochen werden, um den Mikroorganismus auf das behandelte Textil freizusetzen.

14. Verfahren zum Aufrechterhalten einer nützlichen Mikroorganismenkolonie auf einem Textil ausgewählt aus der Gruppe bestehend aus Teppichen, Einrichtungsgegenständen und einer Matratzenoberfläche, wobei das Verfahren Folgendes umfasst:
Abscheiden von brüchigen Mikrokapseln, die eine den Mikroorganismus umfassende Flüssigkeit enthalten, auf dem Textil durch Auftragen einer Zusammensetzung nach einem der Ansprüche der Ansprüche 1 bis 8, und anschließendes Verdampfen der Behandlungslösung, um ein behandeltes Textil bereitzustellen, und
Freisetzen des Mikroorganismus auf dem behandelten Textil während der Verwendung des behandelten Textils durch Aufbrechen der brüchigen Mikrokapseln, verursacht durch die Einwirkung von direktem äußerem Druck und/oder Scherkräfte während einer herkömmlichen Verwendung des behandelten Textils.

15. Verwendung einer Zusammensetzung nach einem der Ansprüche 1 bis 8 zur Bereitstellung einer nützlichen Mikroflora auf einem Textil ausgewählt aus der Gruppe bestehend aus Teppichen, Einrichtungsgegenständen und einer Matratzenoberfläche, durch Aufbrechen von auf dem Textil abgeschiedenen brüchigen Mikrokapseln, um Mikroorganismen auf dem Textil unter Einwirkung von direktem äußeren Druck und/oder Scherkräften während einer herkömmlichen Verwendung des Textils freizusetzen.

## Revendications

1. Composition pour la distribution d'un micro-organisme sur un textile choisi parmi le groupe constitué de tapis, de meubles et d'une surface de matelas, la composition comprenant des microcapsules friables ayant un diamètre de 1 à 300 µm dispersées dans une solution de traitement, les microcapsules étant adaptées pour distribuer un liquide sur ledit textile par rupture sous l'action d'une pression externe directe et/ou de forces de cisaillement lors d'une utilisation conventionnelle dudit textile, les microcapsules comprenant une enveloppe polymère ayant une face externe et une face interne, la face interne encapsulant le liquide, la proportion en poids d'enveloppe par rapport au noyau liquide étant de 1:500 à 1:5000, le liquide contenant le micro-organisme dans un état végétatif et l'enveloppe polymère étant un matériau polymère imperméable aux matériaux dans le noyau liquide et aux matériaux qui peuvent entrer en contact avec la face externe de l'enveloppe.

2. Composition selon la revendication 1 dans laquelle la face externe comprend des groupements fonctionnels réactifs moyennant quoi la face externe peut adhérer chimiquement audit textile,

3. Composition selon la revendication 2, dans laquelle le groupement fonctionnel réactif comprend une fraction réactive adaptée pour fournir une liaison covalente audit textile.

4. Composition selon l'une quelconque des revendications précédentes, dans laquelle le micro-organisme est choisi dans le groupe constitué de bactéries sporeuses, de champignons sporeux, de bactéries non sporeuses, de champignons non sporeux et de mélanges de ceux-ci.

5. Composition selon l'une quelconque des revendications précédentes, dans laquelle le liquide est un liquide non aqueux.

6. Composition selon la revendication 5, dans laquelle le liquide non aqueux est un liquide non miscible à l'eau choisi dans le groupe constitué d'huiles organiques, d'huiles de silicone, de fluorocarbures et de mélanges de ceux-ci.

7. Composition selon l'une quelconque des revendications précédentes, dans laquelle l'enveloppe comprend une couche polymère, dans laquelle le polymère est une résine mélamine formaldéhyde.

8. Composition selon l'une quelconque des revendications précédentes dans laquelle la solution de traitement est une solution aqueuse.

9. Procédé de traitement d'un textile choisi dans le groupe constitué de tapis, de meubles et d'une surface de matelas comprenant :
a) la fourniture d'une composition selon l'une quelconque des revendications 1 à 8,
b) l'application de la composition sur le textile, moyennant quoi les microcapsules sont déposées sur le textile pour fournir un textile traité.

10. Procédé selon la revendication 9 dans lequel les microcapsules sont chimiquement liées, de préférence liées par covalence, au textile.

11. Procédé selon la revendication 9 ou la revendication 10 comprenant en outre l'application d'un agent de liaison sur la surface, moyennant quoi les microcapsules sont liées chimiquement au textile.

12. Procédé selon l'une quelconque des revendications 9 à 11 dans lequel le textile est une surface de matelas ou un tapis.

13. Procédé selon l'une quelconque des revendications 9 à 12, dans lequel la solution de traitement est éliminée par évaporation, et après ladite élimination, les microcapsules sont rompues mécaniquement par une pression externe directe et/ou des forces de cisaillement générées lors d'une utilisation conventionnelle du textile traité pour libérer le micro-organisme sur le textile traité.

14. Procédé de maintien d'une colonie de micro-organismes bénéfiques sur un textile choisi dans le groupe constitué de tapis, de meubles et d'une surface de matelas, le procédé comprenant ;
le dépôt de microcapsules friables, contenant un liquide comprenant le micro-organisme, sur le textile par application d'une composition selon l'une quelconque des revendications 1 à 8, et évaporation ultérieure de la solution de traitement pour fournir un textile traité, et
la libération du microorganisme sur le tissu traité lors de l'utilisation du textile traité par rupture des microcapsules friables provoquée sous l'action d'une pression externe directe et/ou de forces de cisaillement lors d'une utilisation conventionnelle du textile traité.

15. Utilisation d'une composition selon l'une quelconque des revendications 1 à 8, pour fournir une microflore bénéfique sur un textile choisi dans le groupe constitué de tapis, de meubles et d'une surface de matelas par rupture de microcapsules friables déposées sur le textile, pour libérer des micro-organismes sur le textile sous l'action d'une pression externe directe et/ou de forces de cisaillement lors d'une utilisation conventionnelle du textile.
